# EUROPEAN PATENT SPECIFICATION

(11) **EP 2 142 056 B1**
(45) Date of publication and mention of the grant of the patent: **29.09.2010**
(21) Application number: 08733501.4
(22) Date of filing: 09.04.2008
(51) Int. Cl.: A47J 31/44, F24C 3/12, F24C 7/08, H01H 19/02

(54) **WARNING DEVICE FOR FOOD PREPARATION APPLIANCE**
WARNVORRICHTUNG FÜR VORRICHTUNG ZUR NAHRUNGSMITTELZUBEREITUNG
DISPOSITIF D'AVERTISSEMENT POUR APPAREIL DE PRÉPARATION D'ALIMENTS

(30) Priority: 10.05.2007 BR PI0702019
(43) Date of publication of application: 13.01.2010
(73) Proprietor: WHIRLPOOL S.A., 04578-000 São Paulo SP (BR)
(72) Inventor: SANTOS GREFF, Diego, 89218-060, Joinville - SC (BR); SIMÕES DA PAIVA NETO, Álvaro, 89221-575, Joinville - SC (BR); PICCINI NOTHEN, Luciano, 89221-650, Joinville - SC (BR); KAZUMI YAMAKAWA, Eduardo, 89202-170, Joinville - SC (BR); BASSANEZI LOSS, Itamar José, 89203-072, Joinville - SC (BR)
(74) Representative: Burt, Matthew Thomas
(86) International application number: PCT/BR2008/000098
(87) International publication number: WO 2008/138082

(56) References cited:
- EP-A- 0 172 576
- EP-A- 1 472 962
- WO-A-2004/104720
- DE-A1- 10 218 294
- DE-A1- 19 539 081
- US-A- 4 044 214
- US-A1- 2005 236 263

## Description

The invention herein refers to a warning device that alerts the user regarding the angular position of flow control buttons, which also allows the user to be aware of heating temperatures on areas next to the burners, the intensity of the flames and which button is being used.

### Description of the prior art

When preparing food in specific appliance for such purpose, such as stoves, the user can be exposed to some risks due to high temperatures reached when warming up food, and also by the fact that this type of appliance works using gas, which can leak.

In order to exemplify such risks, it is necessary to set the context in which potential accidents happen, describing, in first place, a typical prior art stove that comprises: (i) a console on its frontal and intermediary portions, which has several buttons; (ii) a top portion, where the burners are located, which is substantially flat and made of metallic material; and, normally an oven located on the bottom part below the console.

Buttons provided on the console control gas flow delivered to the burners through their angular position, i.e., buttons are angularly movable around their geometrical axis and, depending on the position they are turned, gas flow that goes through the burner associated to this button increases or decreases. In several cases, for flame to be created, the buttons, when leaving the rest/off position (which establish that there is no gas flow through the burners) produce a spark so the gas exhaled through the burners is converted into flame and, after that, into heat. Besides that, many stoves have an ignition key apart from the flow control buttons operation, which is responsible for producing the spark.

However, in such situations such as: stove malfunction, bad use of the person operating the stove, among others, it is possible that a spark is not generated even when turning the flow control button, or activating the ignition key, causing the gas to flow through the burners without any flame being created. In this case, if the operator does not notice that, the gas can easily spread around the environment of the stove, normally a kitchen (a closed environment), which could cause a potential explosion risk of the gas that was dispersed on the environment, considering the fact that the gas used in stoves is highly flammable.

Another type of common problem found on typical prior art stoves lies on the danger of a person leaning his/her body on the upper portion, which is directly in contact with the burners, and having some sort of burn once the person does not know if the metallic surface is hot or not. Moreover, even for a normatization matter, the upper portion shall have a limit temperature that does not result in a high risk to the user.

Due to this concept, patent document EP 0172576 describes a solution that implements a type of warning to the user regarding the angular position of the flow control button. More specifically, the flow control button has, around it, an illuminable concentric ring with respect to button 3 and, internally to the console and joined to the rear portion of the button, a reflection chamber adjacent to a light source compartment which has a source of light on its interior part. Therefore, when turning the button, the intensity of burner flame associated to this button changes at the same moment the intensity of the light emitted by the source changes, and it is important to emphasize that the reflection chamber is also joined to the illuminable ring. Therein, light generated is propagated through said ring, making the angular position of the button visible to the user, in reference to the intensity of the flames.

However, the solution presented by the European document herein, despite representing a great step to solve the problem presented by the prior art, still has a series of drawbacks. The main drawbacks are:
(i) the complex design of the button on the console, which requires a reflection chamber associated to the light source compartment, said reflection chamber being inside the console, i.e., the button has a small outer portion and another big portion inside the console, which, among other factors, makes light source replacement impracticable, in case of failure;
(ii) the fact that the light is emitted in a single color makes the evaluation done by the user (layman) subjective and imprecise regarding the intensity of the illumination and, therefore, regarding the temperature on the upper portion of the stove.

Thereby, it is obvious that the current prior art does not foresees a warning device that has a simple structure, few electronic components (and, therefore, lower tendency to making mistakes during the operation) and means to view the temperature, or angular position of the flow control button, that make handling easier and the interface between the user/consumer and the product more pleasant, assuring a better interpretation of information available. Document US-4 044 214 discloses a device according to the preamble of claim 1.

### Objectives of the invention

Therefore, the objective of the invention herein is to provide a warning device for food preparation appliances that comprises a simple structure in reference to the prior art and means to view the temperature, or angular position of the flow control button, more precisely, evident and which can be easily interpreted by any person.

### Brief description of the invention

The objectives of the invention herein are accomplished through a warning device for food preparation appliance that comprises: (i) a fixation base located at the surface of a console of the food preparation appliance; and (ii) a flow control button, associated to said fixation base which is capable of moving angularly around its geometric axis from a maximum heat position to a rest/off position.

Moreover, the fixation base comprises a light source compartment that has a light source and where, through the angular movement of the button, the light source changes the color of light emitted.

Additionally, when the flow control button is angularly moved to the rest/off position, the light emitted by the light source has its colors gradually diminished until the light is off.

### Brief description of the figures

The invention herein will be described in details based on a usage example represented on the drawings. The figures show:
Figure 1 - is a perspective view of the warning device of the invention herein disposed on the console of a food preparation appliance;
Figure 2 - is a sectional side view of the warning device of the invention herein disposed on the console of a food preparation appliance;
Figure 3 - is a perspective view of the warning device fixation base of the invention herein; and
Figure 4 - is a sectional side view of the warning device fixation base of the invention herein.

### Detailed description of the figures

Initially, it is important to notice that the food preparation appliance, on the preferred embodiment of the invention herein, is a stove built analogous to the one abovementioned on the prior art. However, it is obvious that any other design variation of this appliance will not restrict the protection scope of the invention herein, once the food preparation appliance comprehended by the invention herein shall have the warning device of the invention.

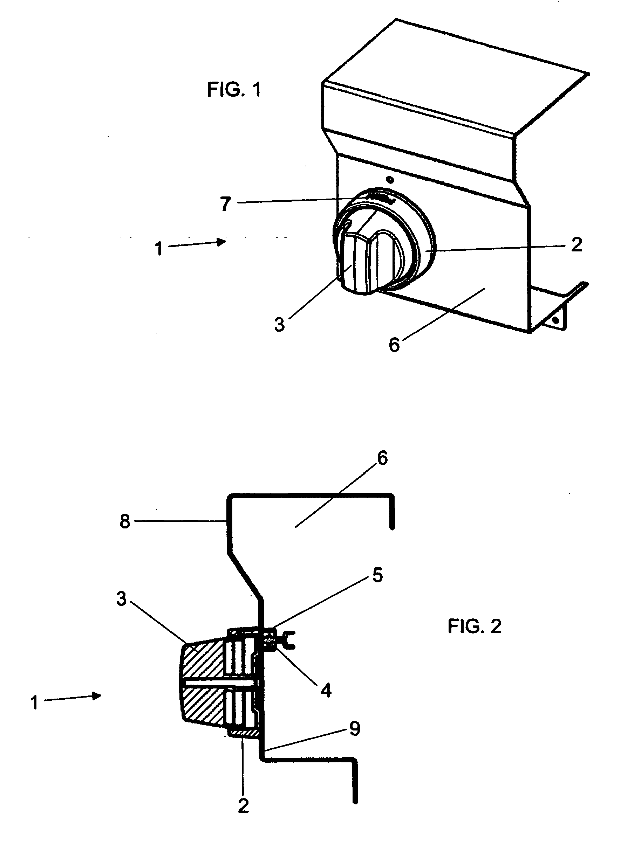

As it is possible to see therefrom figures 1 and 2, warning device 1 of the invention herein has a fixation base 2, preferably comprehended at the outer surface 8 of the console 6 of the food preparation appliance. In accordance to the abovementioned, console 6 is located in a region adjacent to the upper portion of the food preparation appliance (not illustrated). Therefore, it is important to emphasize that more than one device can be provided in a food preparation appliance without the scope of the invention herein being impaired.

The means through which the fixation base 2 is associated to the outer surface 8 of the console 6 can change according to the preference of the person responsible for assembling or designing a stove that has at least one warning device 1 of the invention herein. Thereby, fixation base 2 can be welded to the outer surface 8 or it can be totally formed with said outer surface 8 on the manufacturing process of the console 6, without impairing the coverage of the invention scope. Therefore, preferably, the foreseen joining form of the fixation base 2 with the outer surface 8 is given through screws fixed on the base 2, which are tightened on the direction to the inside part of the console 6, which are hidden from the user due to the superposition of button 3.

Thereby, due to the fact the preferred fixation happens using screws, the device 1 of the invention herein has a unique advantage regarding the prior art: the possibility the user has to remove the fixation base 2 from the console 6 to change the light source 4 in case of failure. Thus, in order to remove the fixation base 2, it is necessary to remove the button 3 to have access to the screws (not illustrated) for that can be possible remove the fixation base 2. The easiness to remove the fixation base 2 and the possibility to change the light source 4 undoubtedly emphasize the structural simplicity of the device 1 of the invention herein.

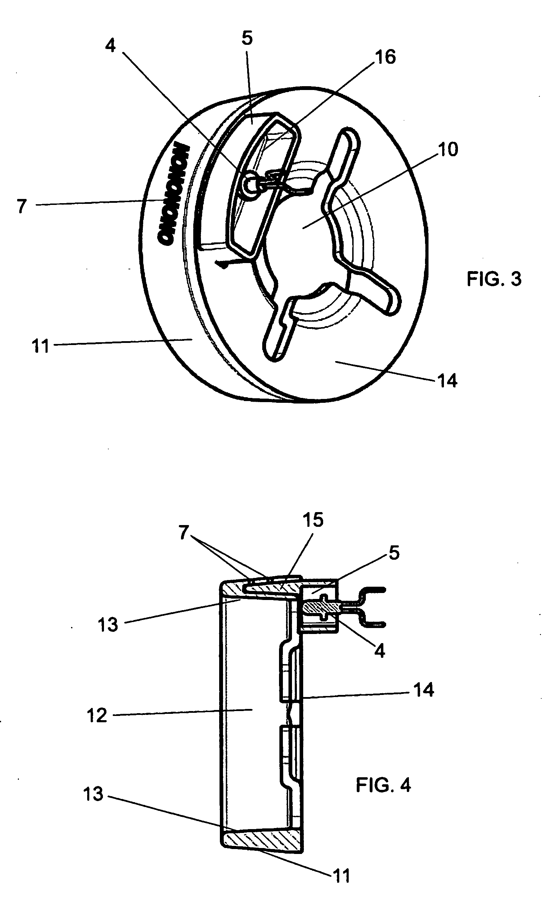

In a more detailed way, fixation base 2 can be seen therefrom figures 3, 4. Thereby, as it is possible to observe, base 2 comprises an outer wall 11, substantially cylindrical, which defines its outer shape, and a receptacle region 12, responsible for receiving the flow control button 3 on its interior. Said receptacle region 12 comprises an inner wall 13, also substantially cylindrical, besides being adjacent and substantially perpendicular to a rear portion 14, which has a substantially circular shape and has an inner passing opening 10. Said inner passing opening 10 has a shape that enables the access of a device that transmits the angular movement of the flow control button 3 to open or close the gas flow to the burners (not illustrated) as, for example, the shape of a circle associated to partially elongated extensions, radial and orthogonal between themselves.

This design is obviously preferred, therefore this fixation base 2 can have a rectangular shape, i.e., not circular, or any other format that enables the operation of the warning device 1 of the invention herein.

Fixation base 2 comprises a light source compartment 5, preferably located at the rear face of the rear portion 14. More specifically, said light source compartment 5 is joined to the body of the fixation base 2 in a cavity located between the outer wall 13 and the outer wall 11 through the association extremity 15, extended in reference to the rest of the volume of the body of the light source compartment 5 in said cavity. Preferably, the light source compartment 5 is coinjected with the fixation base 2.

The light source compartment can obviously be located in other parts of the body of the fixation base without impairing the protection scope of the invention herein.

In reference to its shape, light source compartment 5 has a transversal section on a substantial rectangular shape, one of its bigger length sides being curved and, between its side walls (or sides) there is an opened region 16, and inside this opened region 16 there is a source of light 4. Said source of light 4 can have a single light bulb or several light bulbs that can change color, materials that can change color due to a variation of physical quantities such as temperature, electrical current, humidity, pressure, among others, or LEDs. Besides that, according to the preferred embodiment of the invention herein, the light source 4 shall be capable of changing the color of light emitted through the change of the angular position of the flow control button 3, showing the quantity of gas delivered to the burners. Regarding the material, the fixation base 2 is made of non-transparent material, preferably metal, and the light source compartment is made of transparent material, preferably plastic, and light emitted by the light source 4 is not propagated through the inner wall 13 and outer wall 11 of the fixation base 2 to the environment. The exceptions are the alert cavities 7 of the outer wall 11.

Said alert cavities 7 allow light to go through the inner wall 13 and the outer wall 11 of the fixation base 2 to be propagated to the environment. Thereby, on the preferred embodiment of the invention herein, the cavities 7 have shapes of letters, more precisely, indicative terms such as "front" or "rear", in order to be possible to associate the fixation base 2 and the flow control button 3 associated to it, to the respective burner, considering that the stove, preferably, has the burners organized in rows, one front row and one back row. Preferably, alert cavities 7 are chamfered.

However, the embodiment that contains the alert cavities 7 on a letter or term shape is not exclusive, once other embodiments, such as, for example, one or more cavities 7 on the shape of one or more indicative symbols (arrows, points, among others) can be applied.

Warning device 1 of the invention herein also has a flow control button 3 associated to the fixation base 2. The flow control button 3 is capable of moving angularly around its geometrical axis from a maximum heat position and a rest/off position. The role of said flow control button 3 is to allow the user, through its rotation, to control gas flow through the burners and consequently allow the user to control the intensity of the flames and the temperature on the upper portion of the stove.

The control exerted through button 3 is preferably proportional to its angular position, i.e., if the button is on the rest/off position that means that in such position gas flow destined to the burners is zero. On the other hand, the further the angular position of button 3 in relation to the rest/off position, the bigger will be the gas flow delivered to the burners, the bigger will be the intensity of the flames and, consequently, the closest it will be from the maximum heat position. Furthermore, it is still important to notice that, depending on the case and rotation direction of the flow control button 3, the rest/off position can be followed by the maximum heat position; therefore, the rotation direction is not a limiting factor to the protection scope.

As it is possible to see, the structure of the warning device 1 of the invention herein is very simple in reference to the one of the prior art, once its assembly is easier in relation to the device of the state of art because it is almost exclusively on the outer part of the console.

Regarding the warning provided to the user, light source 4, through the angular movement of the flow control button 3, changes the color of light emitted; it is valid to observe that the light is propagated through the walls of the light source compartment 4, through the alert cavity 7 and through button 3 itself.

Thereby, through the visualization of the colors slope presented, according to the variation of the angular position of the flow control button 3, the user has the exact notion of the temperature on the upper portion of the stove through the color associated to the current angular position of button 3, besides having the exact notion of the quantity of gas delivered to the burners and to the button 3, which is responsible for igniting the associated burner.

Still, after the flow control button 3 is angularly moved to the rest/off position, light emitted by the light source 4 has its colors gradually changed until the light is switched off, showing that even after the burners are off, the upper portion of the stove is still warm and it will be cooled of with time, warning about the danger to get burned, danger that does not disappear right after the flames disappear from the burners.

There is no distinction regarding the colors used to warn the user, as long as the variation among them allows the warning of angular positions of the flow control button 3.

Thereby, the invention herein brings innovative features in reference to the prior art, once its structure is simple and the temperature warning of the upper portion and/or gas flow delivered to the burners and/or the intensity of the flames is done through a variation of colors, making the interpretation of such information more precise, considering that each color is associated to an angular position, or a range of angular positions. Therefore, the user only has to assimilate the colors that correspond to angular positions to, automatically know if the temperature on the upper portion of the stove is high or not and if the flame to be delivered to the burners shall be intense or not.

Furthermore, if a user forgets one of the buttons 3 in an angular position that is different from the rest/off position without having flames on the burner, it will be possible to identify the gas flow that is leaking besides being possible to identify through which burner the gas is leaking, providing more safety and reliability for the stove operation.

It shall be understood, after a preferred embodiment example is given, that the scope of the invention herein comprises other possible variations, being limited by the content of the claims attached.

## Claims

1. Warning device (1) for food preparation appliance, such as stove, comprising:
a fixation base (2) located outwardly the appliance, at one of its surfaces (8); and
a flow control button (3), associated to said fixation base (2) and being capable of moving angularly around its geometrical axis from a maximum heat position to a rest/off position,
where the fixation basis comprises a light source compartment (5) that has a source of light (4);
and through the angular movement of the flow control button (3) the light source (4) changes the color of emitted light,
the warning device **characterized in that** when the flow control button (3) is angularly moved to the rest/off position, the light emitted by the light source (4) has its colors gradually diminished until the light is off.

2. Warning device according to claim 1, **characterized in that** the fixation base (2) comprises at least one alert cavity (7) through which the light emitted by the light source (4) is capable of being propagated to the environment that encompasses the device.

3. Warning device according to claim 2, **characterized in that** the alert cavity (7) has a shape of letters, words or symbols.

4. Warning device according to claims 1 and 2, **characterized in that** the fixation base (2) is made of non-transparent material and that the light source compartment (5) is made of transparent material capable of transmitting the light emitted by the light source (4).

5. Warning device according to claim 1, **characterized in that** the appliance has a console (6), where the fixation base (2) is assembled on the outer surface (8) of the console.

6. Warning device according to claims 1 and 5, **characterized in that** the fixation base (2) is removable from the outer surface (8) of console (6).

## Patentansprüche

1. Warnvorrichtung (1) für Vorrichtung zur Nahrungsmittelzubereitung, wie ein Ofen, umfassend:
eine Befestigungsbasis (2), die sich außen an der Vorrichtung an einer ihrer Oberflächen (8) befindet; und
einen Ablaufsteuerungsknopf (3), der mit der besagten Befestigungsbasis (2) verbunden ist und sich von einer maximalen Heizposition in eine Ruhe-/Aus-Position in Winkeln um seine geometrische Achse bewegen kann,
wobei die Befestigungsbasis ein Lichtquellenfach (5) umfasst, das eine Lichtquelle (4) hat;
und durch die Winkelbewegung des Ablaufsteuerungsknopfs (3) ändert die Lichtquelle (4) die Farbe des ausgestrahlten Lichts,
wobei die Warnvorrichtung **dadurch gekennzeichnet ist, dass**, wenn der Ablaufsteuerungsknopf (3) in Winkeln in die Ruhe-/Aus-Position bewegt wird,
die Farben des Lichts, das von der Lichtquelle (4) ausgestrahlt wird, allmählich verblassen, bis das Licht aus ist.

2. Warnvorrichtung nach Anspruch 1, **dadurch gekennzeichnet, dass** die Befestigungsbasis (2) mindestens eine Warnaussparung (7) umfasst, durch die das Licht, das von der Lichtquelle (4) ausgestrahlt wird, in die Umgebung verbreitet werden kann, welche die Vorrichtung umschließt.

3. Warnvorrichtung nach Anspruch 2, **dadurch gekennzeichnet, dass** die Warnaussparung (7) eine Form aus Buchstaben, Wörtern oder Symbolen besitzt.

4. Warnvorrichtung nach den Ansprüchen 1 und 2, **dadurch gekennzeichnet, dass** die Befestigungsbasis (2) aus nicht-transparentem Material hergestellt ist und dass das Lichtquellenfach (5) aus transparentem Material hergestellt ist, welches das Licht, das von der Lichtquelle (4) ausgestrahlt wird, übertragen kann.

5. Warnvorrichtung nach Anspruch 1, **dadurch gekennzeichnet, dass** die Vorrichtung eine Konsole (6) besitzt, an der die Befestigungsbasis (2) an der äußeren Oberfläche (8) der Konsole angebracht ist.

6. Warnvorrichtung nach den Ansprüchen 1 und 5, **dadurch gekennzeichnet, dass** die Befestigungsbasis (2) von der äußeren Oberfläche (8) der Konsole (6) abnehmbar ist.

## Revendications

1. Dispositif d'avertissement (1) pour appareil de préparation d'aliments, tel qu'une cuisinière, comprenant :
une base de fixation (2) située à l'extérieur de l'appareil, à une de ses surfaces (8) ; et
un bouton de régulation de débit (3), associé à ladite base de fixation (2) et capable de se déplacer de façon angulaire autour de son axe géométrique d'une position de chaleur maximum à une position de repos/d'arrêt,
où la base de fixation comprend un compartiment de source de lumière (5) qui comporte une source de lumière (4) ;
et, grâce au mouvement angulaire du bouton de régulation de débit (3), la source de lumière (4) change la couleur de la lumière émise,
le dispositif d'avertissement étant **caractérisé en ce que**, lorsque le bouton de régulation de débit (3) est déplacé de façon angulaire jusqu'à la position de repos/d'arrêt, les couleurs de la lumière émise par la source de lumière (4) sont réduites progressivement jusqu'à ce que la lumière soit éteinte.

2. Dispositif d'avertissement selon la revendication 1, **caractérisé en ce que** la base de fixation (2) comprend au moins une cavité d'alerte (7) à travers laquelle la lumière émise par la source de lumière (4) peut se propager jusqu'à l'environnement qui englobe le dispositif.

3. Dispositif d'avertissement selon la revendication 2, **caractérisé en ce que** la cavité d'alerte (7) présente une forme de lettres, de mots ou de symboles.

4. Dispositif d'avertissement selon les revendications 1 et 2, **caractérisé en ce que** la base de fixation (2) est faite d'un matériau non transparent et que le compartiment de source de lumière (5) est fait d'un matériau transparent capable de transmettre la lumière émise par la source de lumière (4).

5. Dispositif d'avertissement selon la revendication 1, **caractérisé en ce que** l'appareil comporte une console (6), où la base de fixation (2) est assemblée sur la surface extérieure (8) de la console.

6. Dispositif d'avertissement selon les revendications 1 et 5, **caractérisé en ce que** la base de fixation (2) est démontable de la surface extérieure (8) de la console (6).
